# EUROPEAN PATENT SPECIFICATION

(11) **EP 2 597 410 B1**
(45) Date of publication and mention of the grant of the patent: **02.11.2016**
(21) Application number: 11809766.6
(22) Date of filing: 25.07.2011
(51) Int. Cl.: F26B 3/32, F26B 11/14

(54) **DRYING DEVICE AND DRYING METHOD**
TROCKNUNGSVORRICHTUNG UND TROCKNUNGSVERFAHREN
DISPOSITIF DE SÉCHAGE ET PROCÉDÉ DE SÉCHAGE

(30) Priority: 23.07.2010 JP 2010179804
(43) Date of publication of application: 29.05.2013
(73) Proprietor: Hokkaido Tokushushiryou Kabushikikaisha, Hokkaido 060-0013 (JP)
(72) Inventor: ONOSE, Kazuhiro, Kamikawa-gun Hokkaido 089-0101 (JP)
(74) Representative: Vièl, Frédérique
(86) International application number: PCT/JP2011/066839
(87) International publication number: WO 2012/011600

(56) References cited:
- FR-A1- 2 429 982
- FR-A1- 2 694 550
- JP-A- 1 317 915
- JP-A- 7 159 034
- JP-A- 54 121 457
- JP-A- 2002 001 727
- JP-A- 2008 290 058
- JP-A- 2010 069 477
- US-A- 4 619 052

## Description

### Technical Field

The present invention relates to a dryer and a drying method and in particular relates to a technique for drying a drying object while circulating it in a drying vessel.

### Background Art

The invention according to Patent Literature 1 by the applicant of this case is a device for producing dry fermented feed and dry fermented manure of animal and plant residue in which fermentation heat generated by adding fermentation bacteria to an animal and plant residue is used to circulate a drying object repeatedly in combination with air in the device.

This invention is characterized by an integral configuration of a fermentation vessel, a screw conveyer, a circulation duct, an exhaust duct and a product storage vessel in order to dry an animal and plant residue while circulating it and to transport a fermented and dried product along with an exhaust emitted from an exhaust duct to a product storage vessel.

### Citation List

### Patent Literature

Patent Literature 1: Japanese Patent No.4221617

### Summary of Invention

### Technical Problem

In the device disclosed in the above Patent Literature 1, a space to load and discharge a drying object is limited, resulting in other limitations such as machine installation space. This device is also limited structurally to result in restriction of a versatile arrangement of each component element and expansion and reduction of the scale.

According to the above disclosed device, the drying object is left at rest in a deposited/stored place, which takes time to prepare a dried product.

A drying object may be damaged and adhere in the device during circulation.

When an organic substance under a fermentation process is dried, fermentation is further accelerated and drying time is shortened in order to produce dry fermented feed and dry fermented manure of good quality.

JP 7 159034 A disclose a dryer for food and the like comprising a screw feeder connected to a lower part of a drying cylinder and a raw material supply hopper to receive and feed supplying or drying raw material, a blower connected to the feeder to feed under pressure the material together with input gas and hot gas, and a circulating cylinder connected to the blower to feed the material to diffuse it into a ceiling in the cylinder. Further, the dryer comprises a plurality of stages of partition plates with dropping holes arranged in the cylinder, heating means attached to the plates, and agitating scrapers arranged on the plates.

### Solution to Problem

In order to solve the above problems, the present invention uses a dryer according to claim 1.

The device is provided with solid-gas separation means to separate a drying object into a solid and gas by introducing an air current in the above circulation drying means and loading a drying object into the drying vessel again.

The present invention may also be configured by forming the above drying vessel into a substantially cylindrical container and providing, in the drying vessel, a rotary shaft arranged in a shaft direction of the substantially cylindrical vessel; injection tubes extended to a centrifugal direction from the rotary shaft and having injection holes for injecting pressure air upward; plates installed obliquely so as to cover the injection holes of the injection tubes from above the injection holes; and pressure air blowing means for supplying pressure air to the injection tubes.

A drying object under a drying process is floated while shifting and stirring the drying object in the drying vessel in which the drying object is deposited and stored, and air is supplied from below, whereby facilitating drying and enabling further shortening of time spent for preparing a product.

In a configuration of using a circulation duct as the circulation drying means, an air injection nozzles may be arranged to supply compressed air so as to generate an induced air current for protecting a drying object in the outside of an air current in an inner wall of the circulation duct.

When the drying object is transported by an air current from a lower part to an upper part of the drying vessel repeatedly, a drying object can be circulated smoothly with reduced damages and adherence of a drying object.

The present invention also relates to the drying method according to claim 4.

### Advantageous Effects of Invention

As stated above, the drying vessel, the hopper having the transport means such as screw conveyer, the circulation drying means and the solid-gas separation means such as cyclone are composed separately to secure means for loading various kinds of drying objects and make it easier to discharge a dried object being a product obtained after drying or other objects, allowing versatility in designing the dryer and easy expansion and reduction of the scale.

It is also possible to provide the dryer not only for fermenting and drying an animal and plant residue but also for applying to various kinds of drying objects.

By having the means for separating a drying object into a solid and gas with respect to an air current in the circulation drying means, a drying object which is scattered in the air current can be loaded into the drying vessel efficiently. In particular, a drying object can be loaded in a predetermined position of the drying vessel, whereby stabilizing the flow of an air current in the drying vessel and contributing to efficient drying.

The drying object is floated while shifting and stirring the drying object in the drying vessel and air is supplied from below, and the drying object is transported by an air current repeatedly from a lower part to an upper part of the drying vessel to increase the opportunity and area to bring the drying object into contact with dry air evenly and substantially shortening the time spent for drying. By arranging the air injection nozzles to further generate an induced air current in the outside of an air current for blowing the residue along with air to a lower inner wall and a curved inner wall of the circulation exhaust port in the circulation duct serving as the circulation drying means, the drying object is prevented from being damaged and adhering in the device and smooth circulation thereof is realized in the device so that an evenly dried state can be obtained.

In the drying vessel which is a storage space, air is supplied evenly while stirring an organic substance under a fermentation process so as to further accelerate fermentation, enhance generation of fermentation heat, use fermentation heat, and increase the opportunity and area to bring the drying object into contact with air, whereby enabling drying without using new thermal power and making the time spent for drying significantly shorter. As a result, dry fermented feed and dry fermented manure that are uniform and high in the nutritive value can be produced with preservation of energy.

### Brief Description of Drawings

Fig. 1 is a schematic view of a dryer according to one embodiment of the present invention.

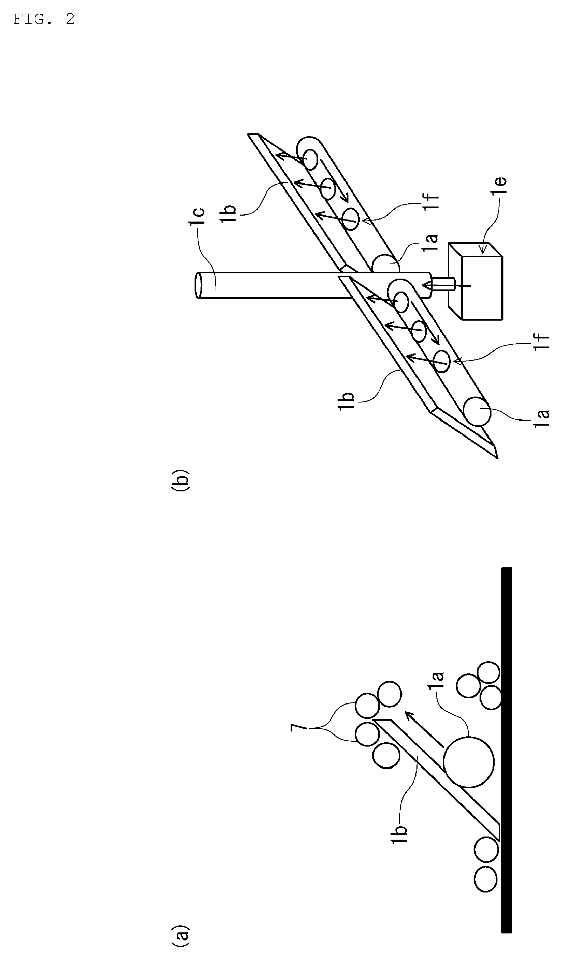

Fig. 2 is a detail view in relation to air injection tubes and plates and other components according to the present invention.

### Description of Embodiments

Explained below will be an embodiment of the present invention by referring to the drawings.

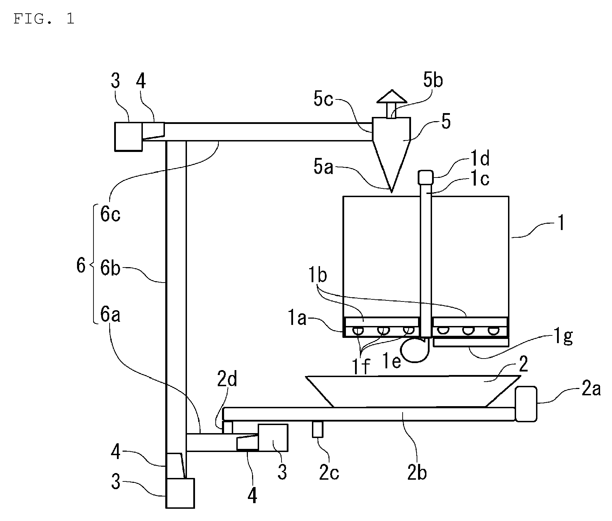

As shown in Fig. 1, a dryer according to the present invention is composed of a cyclone 5 arranged in an upper area by including an induction port 5c, an exhaust port 5a and an outlet 5b, and components arranged in a lower area including a drying vessel 1 being a container having an exhaust port 1g, a hopper 2 which is placed below the exhaust port 1g and has, in a lower part thereof, a circulation exhaust port 2d, an opening/closing product exhaust port 2c and a screw conveyer 2b containing a motor 2a, and a circulation duct 6 continued from the circulation exhaust port 2d and stretched from a blower 3 to the induction port 5c of the cyclone 5.

For the cyclone 5, known means for use in solid-gas separation can be used, for example, a method of using a bag filter and/or a configuration of using other dust collectors.

Owing to the hopper 2 arranged below the drying vessel 1, a drying object of a fixed amount can be guided to the circulation duct 6 evenly and a backflow due to a blow by the blower 3 can be prevented. The screw conveyer can be replaced with known transport means and not only a belt conveyer but also a transport method by air pressure such as, for example, vacuum conveyer may be also employed.

As circulation drying means according to the present invention, the present embodiment is provided with the circulation duct 6 which is made of a circulation lower duct 6a, a circulation vertical duct 6b and a circulation upper duct 6c. Each of the ducts is provided with the blower 3 and an air injection nozzle 4, wherein a drying object has an opportunity to come into contact with air frequently with the help of an air current generated by the blowers 3 in the middle of transfer. The circulation duct 6 may be composed of any number of combined ducts and the combination can be appropriately changed according to the installation site and size.

In addition, the circulation drying means according to the present invention is not limited to the circulation duct and may also be realized in a configuration of flying a drying object upward with a wind pressure from a lower part of the drying vessel 1 by using a blower in a similar manner as a snow throwing mechanism of a snow plow, for example.

According to the present invention, it is further possible to form the drying vessel 1 into a cylindrical container, in which a rotary shaft 1c is arranged to facilitate stirring in the vicinity of the vessel of the rotary shaft 1c, air injection tubes 1a having holes 1f serving as air supply ports are arranged, plates 1b are installed obliquely so as to cover the holes 1f of the injection tubes 1a from above the holes 1f, and the injection tubes 1a are provided with a blower 1e which is in communication with the holes 1f by passing through the inside of the rotary shaft.

Owing to rotational action of the rotary shaft 1c and the plates 1b, a drying object is stirred in the drying vessel 1 and a drying object is flown upward by a blow sent from the air injection tubes 1a. Therefore, a drying object can be brought into contact with air evenly in the drying vessel 1 and thus prevented from remaining in the vessel and being dried unevenly.

In the circulation duct 6, a blow from the blowers 3 is preferably injected by the air injection nozzles 4 so as to generate an induced air current in the outside of an air current in a lower inner wall and a curved inner wall of the circulation duct 6 arranged below the circulation exhaust port 2d. Therefore, a drying object is prevented from being damaged and adhering in the device and smooth circulation is realized in the device so that an even dried state can be obtained.

A drying object is loaded by arranging a space to load a drying object in any of the drying vessel 1, the hopper 2, the cyclone 5 and the circulation duct 6, and air sent from the blower 1e is supplied to a drying object from below by using the holes 1f arranged in the air injection tubes 1a while floating the drying object by the air injection tubes 1a with the obliquely installed plates 1b in the drying vessel 1, followed by transferring a drying object to the exhaust port 1g, discharging the drying object from the exhaust port 1g to the hopper 2, and transferring/discharging the drying object to the circulation exhaust port 2d by the screw conveyer 2b, after which a discharged drying object is blown with compressed air sent from the blowers 3 in the inside of the circulation duct 6 and transferred to an upper part of the drying vessel 1 through separation from air by using the cyclone 5. The drying object is also prevented from colliding and adhering to inner walls in the circulation duct 6 by arrangement of an induced air current in the outside of an air current for blowing a drying object and drying is accelerated by increasing the opportunity and area to bring a drying object into contact with air resulting from smooth and repetitive circulation in the device, after which a dried product is discharged from the opened product exhaust port 2c.

Reference Signs List
- 1: DRYING VESSEL
- 1a: AIR INJECTION TUBE
- 1b: PLATE
- 1c: ROTARY SHAFT
- 1d: MOTOR
- 1e: BLOWER
- 1f: HOLE
- 1g: EXHAUST PORT
- 2: HOPPER
- 2a: MOTOR
- 2b: SCREW CONVEYER
- 2c: PRODUCT EXHAUST PORT
- 2d: CIRCULATION EXHAUST PORT
- 3: BLOWER
- 4: AIR INJECTION NOZZLE
- 5: CYCLONE
- 5a: EXHAUST PORT
- 5b: OUTLET
- 5c: INDUCTION PORT
- 6: CIRCULATION DUCT
- 6a: CIRCULATION LOWER DUCT
- 6b: CIRCULATION VERTICAL DUCT
- 6c: CIRCULATION UPPER DUCT

## Claims

1. A dryer comprising:
a drying vessel (1) being a container for stirring and drying a drying object in combination with air in the inside thereof;
a hopper (2) arranged below an exhaust port (1g) provided in a lower part of the drying vessel;
transport means (2b) connected to the hopper and having a product exhaust port (2c) for allowing dried product to be taken out of said transport means (2b), and a circulation exhaust port (2d); and
circulation drying means (6) for guiding the drying object discharged from the circulation exhaust port of the transport means to an upper part of the drying vessel while drying the drying object with an air current generated by blower means (3); wherein
said drying object is dried in at least the drying vessel (1) and the circulation drying means (6) while circulating the drying object,
**characterised in that** a
solid-gas separation means (5) is provided to separate the drying object into a solid and gas by introducing, in said solid-gas separation means (5), said air current generated in the circulation drying means (6) and loading said drying object into the drying vessel again.

2. The dryer according to claim 1, wherein
the drying vessel (1) is formed into a substantially cylindrical container and the drying vessel internally contains:
a rotary shaft (1c) arranged in a shaft direction of the substantially cylindrical vessel;
injection tubes (1a) extended to a centrifugal direction from the rotary shaft and having injection holes (1f) for injecting pressure air upward;
plates (1b) installed obliquely so as to cover the injection holes of the injection tubes from above the injection holes; and
pressure air blowing means (1e) for supplying pressure air to the injection tubes.

3. The dryer according to claim 1 or 2, wherein
a circulation duct (6) is used as the circulation drying means and air injection nozzles (4) are arranged to supply compressed air so as to generate an induced air current for protecting the drying object in the outside of the air current against an inner wall of the circulation duct.

4. A drying method comprising the following steps:
a drying object is discharged from a lower part of a drying vessel (1) being a container for stirring and drying said drying object in combination with air in the inside thereof;
the drying object is guided to an upper part of the drying vessel while blowing the drying object with an air current generated in circulation drying means (6); and
the drying object is loaded into the drying vessel (1) again, whereby
the drying object is scattered and brought into contact with air frequently in the drying vessel (1) and the circulation drying means (6) with the help of an air current generated by blowers (1e, 3) for improving drying efficiency,
**characterised in that**
the drying method includes, before loading the drying object into the drying vessel again from the circulation drying means (6), the step of separating said drying object into a solid and gas by the air current.

5. The drying method according to claim 4, wherein
in a configuration of using a circulation duct (6) as the circulation drying means, an air current is arranged outside a circulation air current in the circulation duct in order to prevent a drying object from coming into contact with the circulation duct and protect a drying object.

6. A method for fermenting/drying animal and plant residue **characterized in that** it comprises the drying method according to any one of claim 4 or 5 wherein the drying object is an animal and plant residue under a fermentation process, and fermentation is accelerated by increasing the opportunity and area to bring the drying object into contact with air by blowing and scattering said drying object in combination with air, using heat of the fermentation for drying.

7. The method for fermenting/drying animal and plant residue according to claim 6, wherein in a storage space for facilitating fermentation of a deposited animal and plant residue, the animal and plant residue is floated while shifting the animal and plant residue and air is supplied to the floated animal and plant residue so as to increase the opportunity and area to bring the animal and plant residue into contact with air and accelerate fermentation and drying, whereby shortening the time spent for preparing a finished product.

8. The method for fermenting/drying animal and plant residue according to claim 6 or 7, wherein in circulation of an animal and plant residue under a fermentation process, a wet residue is prevented from adhering and being damaged in the dryer by arrangement of an air current in the outside of the circulation air current.

## Patentansprüche

1. Trockner, umfassend:
einen Trocknungsbehälter (1), der ein Behälter zum Rühren und Trocknen eines zu trocknenden Gegenstandes in Kombination mit Luft in dessen Inneren ist;
einen Trichter (2), der unterhalb einer Auslassöffnung (1 g) in einem unteren Teil des Trocknungsbehälters angeordnet ist;
Transportmittel (2b), die mit dem Trichter verbunden sind und einen Produktauslassöffnung (2c) aufweisen, um es zu ermöglichen, getrocknetes Produkt aus den Transportmitteln (2b) zu entnehmen; und
einen Zirkulationsauslassanschluss (2d); und
Zirkulationstrocknungsmittel (6) zum Führen des zu trocknenden Gegenstandes aus dem Zirkulationsauslassanschluss der Transportmittel zu einem oberen Bereich des Trockners, während der zu trocknende Gegenstand mit einem Luftstrom, das durch ein Gebläse (3) erzeugt wird, getrocknet wird;
wobei der zu trocknende Gegenstand wenigstens in dem Trockner (20) und den Zirkulationstrocknungsmitteln (6) getrocknet wird, während der zu trocknende Gegenstand zirkuliert,
**dadurch gekennzeichnet, dass**
Festphase-Gas-Trennmittel (5) vorgesehen sind, um den zu trocknenden Gegenstand in eine Festphase und ein Gas zu trennen, indem der Luftstrom, der in den Zirkulationstrocknungsmitteln (6) erzeugt wird, in die Festphase-Gas-Trennmittel eingeführt wird, und der zu trocknende Gegenstand wieder in den Trockner geladen wird.

2. Trockner nach Anspruch 1, wobei der Trocknungsbehälter (1) wird in einem im Wesentlichen zylindrischen Behälter ausgebildet ist und der Trocknungsbehälter innen enthält:
eine Drehwelle (1c), die in einer Wellenrichtung des im Wesentlichen zylindrischen Behälters angeordnet ist;
Einspritzrohre (1a), die sich von der Drehwelle in zentrifugaler Richtung erstrecken und Einspritzöffnungen (1f) zum Einspritzen von Druckluft nach oben aufweist;
Platten (1b), die schräg angeordnet sind, um die Einspritzöffnungen der Einspritzrohre von oben zu bedecken; und
Druckluftblasmittel (1 e) zum Zuführen von Druckluft zu den Einspritzrohren.

3. Trockner nach einem der Ansprüche 1 oder 2, wobei
eine Zirkulationsleitung (6) als Zirkulationstrocknungsmittel verwendet wird und Lufteinspritzdüsen (4) zur Druckluftversorgung angeordnet sind, um einen induzierten Luftstrom zum Schützen des zu trocknenden Gegenstandes außerhalb des Luftstroms gegen eine Innenwand des Zirkulationskanals zu erzeugen.

4. Trocknungsverfahren, umfassend die folgenden Schritte:
ein zu trocknender Gegenstand wird aus dem unteren Bereich eines Trocknungsbehälters (1) entnommen, der ein Behälter zum Rühren und Trocknen des zu trocknenden Gegenstandes in Kombination mit Luft in dessen Innern ist,
der zu trocknende Gegenstand wird zu einem oberen Teil des Trocknungsbehälters geführt, während der zu trocknende Gegenstand mit einem Luftstrom, der in den Zirkulationstrockenmitteln (6) erzeugt wird, angeblasen wird; und
der zu trocknende Gegenstand wird wieder in den Trocknungsbehälter (1) geladen, wobei der zu trocknende Gegenstand verstreut und in dem Trocknungsbehälter (1) und den Zirkulationstrockenmitteln (6) zur Verbesserung der Trocknungseffizienz durch den Luftstrom, der von den Gebläsen (1 e, 3) erzeugt wird, gehäuft in Kontakt mit Luft gebracht wird,
**dadurch gekennzeichnet, dass**
das Trocknungsverfahren den Schritt des Trennens des zu trocknenden Gegenstandes durch den Luftstrom in eine Festphase und ein Gas umfasst, bevor der zu trocknende Gegenstand von den Zirkulationstrockenmitteln (6) wieder in den Trocknungsbehälter geladen wird.

5. Trocknungsverfahren nach Anspruch 4, wobei in einer Verwendungskonfiguration mit einer Zirkulationsleitung (6) als Zirkulationstrockenmittel ein Luftstrom außerhalb eines Zirkulationsluftstroms in der Zirkulationsleitung erzeugt wird, um zu verhindern, dass ein zu trocknender Gegenstand mit dem Zirkulationskanal in Kontakt kommt und um einen zu trocknenden Gegenstand zu schützen.

6. Verfahren zur Vergärung / Trocknen von Tier- und Pflanzenresten, **dadurch gekennzeichnet, dass** es das Trocknungsverfahren gemäß einem der Ansprüche 4 oder 5 umfasst, wobei der zu trocknende Gegenstand ein fermentierender Tier- und Pflanzenrest ist, und die Fermentierung beschleunigt wird durch die Erhöhung der Gelegenheit und Fläche, um den zu trocknenden Gegenstand mit Luft in Kontakt zu bringen durch Anblasen und Verstreuen des zu trocknenden Gegenstandes in Kombination mit Luft, wobei Wärme von der Fermentation zum Trocknen verwendet wird.

7. Verfahren zur Vergärung / Trocknen von Tier- und Pflanzenresten nach Anspruch 6, wobei in einem Speicherraum zur Erleichterung der Fermentation von abgesetzten Tier- und Pflanzenresten die Tier- und Pflanzenreste aufgeschwemmt werden, während die Tier- und Pflanzenreste verschoben werden und Luft den aufgeschwemmten Tier- und Pflanzenresten zugeführt wird, um die Gelegenheit und Fläche zu vergrößern, um die Tier- und Pflanzenreste mit Luft in Kontakt zu bringen und die Fermentation und das Trocknen zu beschleunigen, wodurch die Zeit für die Herstellung eines fertigen Produkts reduziert wird.

8. Verfahren zur Vergärung / Trocknen von Tier- und Pflanzenresten nach Anspruch 6 oder 7, wobei beim Zirkulieren von einem Tier- und Pflanzenrest in einem Fermentationsverfahren ein nasser Rückstand durch das Vorsehen eines Luftstroms außerhalb des Zirkulationsluftstroms daran gehindert wird, in dem Trockner beschädigt zu werden oder anzuhaften.

## Revendications

1. Séchoir comprenant :
un récipient de séchage (1) sous la forme d'un récipient pour agiter et sécher un objet à sécher en combinaison avec de l'air à l'intérieur de celui-ci ;
une trémie (2) disposée en dessous d'un orifice d'évacuation (1g) prévu dans une partie inférieure du récipient de séchage ;
des moyens de transport (2b) reliés à la trémie et munis d'un orifice d'évacuation de produit (2c) pour permettre au produit séché d'être extrait desdits moyens de transport (2b) et d'un orifice d'évacuation de circulation (2d) ;
des moyens de séchage par circulation (6) pour guider l'objet à sécher déchargé de l'orifice d'évacuation de circulation des moyens de transport vers une partie supérieure du récipient de séchage tout en séchant l'objet à sécher avec un courant d'air généré par des moyens de soufflerie (3) ; dans lequel
ledit objet à sécher est séché dans au moins le récipient de séchage (1) et les moyens de séchage par circulation (6) durant la circulation de l'objet à sécher,
**caractérisé en ce que** des moyens de séparation solide/gaz (5) sont prévus pour séparer l'objet à sécher en une matière solide et du gaz en introduisant, dans lesdits moyens de séparation solide/gaz, ledit courant d'air généré dans les moyens de séchage par circulation (6) et en rechargeant ledit objet à sécher dans le récipient de séchage.

2. Séchoir selon la revendication 1, dans lequel le récipient de séchage (1) est réalisé dans un récipient sensiblement cylindrique et le récipient de séchage contient à l'intérieur :
un arbre rotatif (1c) disposé dans une direction d'axe du récipient sensiblement cylindrique ;
des tubes d'injection (1a) s'étendant dans une direction centrifuge de l'arbre rotatif et ayant des trous d'injection (1f) pour injecter de l'air sous pression vers le haut ;
des plaques (1 b) installées obliquement de sorte à recouvrir les trous d'injection des tubes d'injection depuis le dessus des trous d'injection ; et
des moyens de soufflage d'air sous pression (1e) pour amener l'air sous pression dans les tubes d'injection.

3. Séchoir selon la revendication 1 ou 2, dans lequel
un conduit de circulation (6) est utilisé comme moyens de séchage par circulation et des buses d'injection d'air (4) sont agencées pour fournir de l'air sous pression de sorte à générer un courant d'air induit pour protéger d'une paroi intérieure du conduit de circulation l'objet à sécher à l'extérieur du courant d'air.

4. Procédé de séchage comprenant les étapes suivantes :
un objet à sécher est déchargé d'une partie inférieure d'un récipient de séchage (1) réalisé sous la forme d'un récipient pour agiter et sécher ledit objet à sécher en combinaison avec de l'air à l'intérieur de celui-ci ;
l'objet à sécher est guidé vers une partie supérieure du récipient de séchage en soufflant l'objet à sécher avec un courant d'air généré par des moyens de séchage par circulation (6) ; et
l'objet à sécher est chargé à nouveau dans le récipient de séchage (1),
l'objet à sécher étant dispersé et mis fréquemment en contact avec de l'air dans le récipient de séchage (1) et dans les moyens de séchage par circulation (6) à l'aide d'un courant d'air généré par des souffleries (1e, 3) en vue d'améliorer l'efficacité du séchage,
**caractérisé en ce que** le procédé de séchage comprend, avant le rechargement de l'objet à sécher dans le récipient de séchage provenant des moyens de séchage par circulation (6), l'étape de séparation dudit objet à sécher en une matière solide et du gaz par le courant d'air.

5. Procédé de séchage selon la revendication 4, dans lequel, dans une configuration d'utilisation d'un conduit de circulation (6) en tant que moyens de séchage par circulation, un courant d'air est prévu dans la conduite de circulation à l'extérieur d'un courant d'air de circulation afin d'empêcher un objet à sécher d'entrer en contact avec le conduit de circulation et de protéger un objet à sécher.

6. Procédé de fermentation/séchage de résidus animaux et végétaux **caractérisé en ce qu'**il comprend le procédé de séchage selon l'une quelconque des revendications 4 ou 5, l'objet à sécher étant un résidu animal et végétal en cours de fermentation, et la fermentation est accélérée en augmentant les possibilités et la zone pour mettre l'objet à sécher en contact avec l'air par soufflage et par dispersion dudit objet à sécher en combinaison avec de l'air, en utilisant la chaleur de la fermentation pour le séchage.

7. Procédé de fermentation/séchage de résidus animaux et végétaux selon la revendication 6, dans lequel, dans lequel, dans un espace de stockage destiné à faciliter la fermentation d'un résidu animal et végétal qui y est déposé, le résidu animal et végétal est flotté tout en déplaçant le résidu animal et végétal et de l'air est apporté au résidu animal et végétal flottant de manière à augmenter les possibilités et la zone pour mettre le résidu animal et végétal en contact avec de l'air et d'accélérer la fermentation et le séchage, de sorte que le temps passé pour la préparation d'un produit fini est diminué.

8. Procédé de fermentation/séchage d'un résidu animal et végétal selon la revendication 6 ou 7, dans lequel, dans la circulation d'un résidu animal et végétal dans le cadre d'un processus de fermentation, un résidu humide est empêchée d'adhérer et d'être endommagé dans le séchoir en prévoyant un courant d'air à l'extérieur du courant d'air de circulation.
